# EUROPÄISCHE PATENTSCHRIFT

(11) **EP 0 701 402 B1**
(45) Veröffentlichungstag und Bekanntmachung des Hinweises auf die Patenterteilung: **26.03.1997**
(21) Anmeldenummer: 94918825.4
(22) Anmeldetag: 31.05.1994
(51) Int. Cl.: A21D 6/00, A21D 10/00

(54) **BACKWAREN-ZUTATENVERBUND, VERFAHREN ZUR HERSTELLUNG SOWIE VERWENDUNG DESSELBEN**
READY MIX FOR BAKED GOODS, PROCESS FOR PRODUCING THE SAME AND ITS USE
MELANGE PRET A UTILISER POUR PATISSERIE, SON PROCEDE DE PRODUCTION ET SON UTILISATION

(30) Priorität: 01.06.1993 DE 4318148
(43) Veröffentlichungstag der Anmeldung: 20.03.1996
(73) Patentinhaber: Enzensperger, Peter, D-86956 Schongau (DE); Jansen, Silke, D-23558 Lübeck (DE)
(72) Erfinder: Enzensperger, Peter, D-86956 Schongau (DE); Jansen, Silke, D-23558 Lübeck (DE)
(74) Vertreter: Popp, Eugen, Dr.
(86) Internationale Anmeldenummer: EP9401765
(87) Internationale Veröffentlichungsnummer: WO9427445

(56) Entgegenhaltungen:
- GB-A- 928 570
- GB-A- 1 168 692
- US-A- 3 135 612
- US-A- 3 708 309
- US-A- 3 733 210
- DATABASE WPI Section Ch, Week 8822, Derwent Publications Ltd., London, GB; Class D13, AN 88-152592 & JP,A,63 094 961 (NISSHIN FLOUR MILL KK) 26. April 1988

## Beschreibung

Die Erfindung betrifft ein Verfahren zur Herstellung eines rieselfähigen Backwaren-Zutatenverbunds gemäß dem Oberbegriff des Anspruchs 1, einen Backwaren-Zutatenverbund gemäß dem Oberbegriff des Anspruchs 12, der insbesondere nach dem vorgenannten Verfahren hergestellt ist, sowie eine Verwendung eines solchen Backwaren-Zutatenverbundes zur Herstellung von Backwaren.

Bei der Herstellung von Backwaren werden heutzutage oftmals Mischungen von Backzutaten verwendet, die meist als Halbfabrikat einem anderen Stoffgemisch zugeführt und dann weiterverarbeitet werden. Derartige Mischungen erleichtern die Arbeit, da die jeweiligen Wiege- und Mischarbeiten wegfallen.

Die Mischungen werden in großen Gebinden bereitgestellt, in großen Bevorratungsbehältnissen gelagert und je nach Bedarf entnommen. Sie umfassen im allgemeinen Grobstoffe, die beispielsweise partikelartig und insbesondere körnig oder stückig sein können. In den Mischungen sind den Grobstoffen meist Feinstoffe bzw. Zutaten beigemischt, welche beispielsweise die Verarbeitungsfähigkeit des herzustellenden Endproduktes fördern, die Haltbarkeit des Backwaren-Zutatenverbundes und/oder des Endproduktes verlängern, die Geschmacksvielfalt erweitern sowie die Konsistenz des Backwaren-Zutatenverbundes verändern und den grobkörnigen Anteil ergänzen.

Wegen der zum Teil sehr unterschiedlichen Teilchengröße und des sehr unterschiedlichen spezifischen Gewichts der einzelnen Bestandteile der Mischung kommt es jedoch zu einer Entmischung der Grob- und der Feinstoffe bzw. Zutaten. Beispielsweise können sich Feinstoffe mit sehr kleinen Partikelgrößen oder einem großen spezifischen Gewicht im Bevorratungsbehältnis unten ablagern, wogegen Bestandteile mit geringem spezifischen Gewicht eher im oberen Bereich des Behälters zu finden sein werden. Eine genaue Dosierung von Grobstoffen und Feinstoffen bzw. Zutaten eines aus einer Mischung bestehenden und zumindest teilweise entmischten Backwaren-Halbfabrikats ist somit nur ungenau oder überhaupt nicht möglich.

Die Verwendung eines solchen auch nur teilweise entmischten Halbfabrikats führt dazu, daß eine Kontinuität der Endprodukte nicht gewährleistet werden kann.

In "Die Moderne Hauswirtschaft - Lebensmitteltechnologie; Kap. 29, S. 387, Verfasser: Klaus Knopf, Verlag Ferdinand Schöningh, 1975" ist beispielsweise angegeben, daß "die zum Teil sehr unterschiedliche Teilchengröße und das unterschiedliche Gewicht der einzelnen Bestandteile zu erheblichen Schwierigkeiten beim Mischvorgang und der Portionierung führen". Umgangen wurde dieses Problem bisher dadurch, daß die einzelnen Zutaten gesondert eingelagert und der weiteren Verarbeitung separat zugeführt bzw. portionsgerecht zur Verfügung gestellt wurden.

Als Lösung des oben genannten Problems bietet sich auch die Verwendung von Mischungen in viskoser Form an. Derartige Mischungen verlieren nach dem Anbruch der Verpackungseinheit jedoch schnell ihre Haltbarkeit. Demgegenüber behalten trockene Backwaren-Halbfabrikate auch nach dem Öffnen ihrer Verpackungseinheit meist noch lange ihre Haltbarkeit.

Aus der JP-A-63 094961 ist es bekannt, flockige oder körnige Lebensmittel mit einer Zuckersirupschicht zu versehen, um eine Proteindenaturierung oder Oxidation von Fett und Öl zu vermeiden. Dabei werden die erwähnten Lebensmittel mit einer ersten Zuckersirupschicht versehen. Auf diese wird ein pulvriges oder granulares Additiv aufgetragen. Anschließend erfolgt eine weitere Beschichtung mit Zuckersirup. Mit dieser Anweisung soll eine Art Versiegelung des im übrigen eßbereiten Lebensmittels erreicht werden, um die Haltbarkeit desselben zu erhöhen. Als Backwaren-Zutatenverbund ist das bekannte Produkt nicht geeignet, da keine Maßnahmen für eine schnelle Auflösung der Oberflächenbeschichtung und damit entsprechend schnelle Quellung der flockigen oder körnigen Grobstoffe getroffen sind. Die Löslichkeit einer Zuckersirupschicht ist nicht besonders hoch, was natürlich für ein Endprodukt, nicht dagegen für eine Backwaren-Zutat wünschenswert ist. Darüber hinaus ist die bekannte Zuckersirupschicht relativ klebrig. Die für einen Backwaren-Zutatenverbund geforderte Rieselfähigkeit läßt sich mit der bekannten Beschichtung nicht erreichen.

In der US-A-3 135 612 wird die Herstellung einer pulverförmigen Kuchenmischung vorgeschlagen. Zu diesem Zweck wird Mehl mit einer Zucker- und/oder Fettlösung vorbehandelt, und zwar so, daß das Mehl nicht klumpt, wenn es fit Wasser in Kontakt kommt. Die Befeuchtungs- und Dispersionseigenschaften des Mehls sollen auf diese Weise verbessert werden. Die Behandlung des Mehlpulvers erfolgt so, daß durch Agglomeration eine vorbestimmte Partikelgröße erreicht wird. Eine abriebfeste und entmischungssichere Verbindung von Feinstoffen mit Grobstoffen mittels eines wasserlöslichen Haftmittels ist nicht vorgesehen. Auch soll eine Trocknung des hergestellten Produkts ausgeschlossen sein.

Ausgehend vom stand der Technik ist es Aufgabe der vorliegenden Erfindung, einen Backwaren-Zutatenverbund zur Verfügung zu stellen, der eine hohe Abriebfestigkeit besitzt und dementsprechend entmischungssicher ist und der sich darüber hinaus in wäßriger Umgebung durch eine schnelle Auflösung der aufgebrachten Zutaten oder Feinstoffe einerseits und eine entsprechend schnelle Quellung der Grobstoffe andererseits auszeichnet mit der Folge, daß er ein rationelles und wirtschaftliches Arbeiten ermöglicht.

Diese Aufgabe wird beim Verfahren der eingangs genannten Art durch die kennzeichnenden Merkmale des Anspruches 1 und bei einem Backwaren-Zutatenverbund der eingangs genannten Art durch die kennzeichnenden Merkmale des Anspruches 12 gelöst. Ferner wird hinsichtlich der Verwendung des Backwaren-Zutatenverbundes auf Anspruch 16 verwiesen.

Das erfindungsgemäße Verfahren, bei dem Grobstoffe und Feinstoffe bzw. Zutaten mittels eines wasserlöslichen Haftmittels verbunden werden, stellt sicher, daßder Backwaren-Zutatenverbund entmischungssicher zur Verfügung stellbar ist. Auf einfache Weise wird gewährleistet, daß die Mischung auch einem größeren Bevorratungsbehälter in vorbestimmtem Mischungsverhöltnis und genau dosierbar entnommen werden kann. Ferner kann die Anzahl der separat zu lagernden Artikel oder Backzutaten reduziert werden, dadie verschiedenen Grobstoffe und Feinstoffe nicht separat aufbewahrt werden müssen. Des weiteren wird auch die Weiterverarbeitung vereinfacht, da nur die jeweilige Mischung dem nächsten Verarbeitungsschritt zuzuführen ist und die einzelnen Bestandteile nicht erst extra gemischt werden müssen. Dies ermöglicht ein rationelles und wirtschaftliches Arbeiten und spart darüber hinaus Kosten bei der Herstellung des Endprodukts.

Von Bedeutung ist, daß bei der Weiterverarbeitung des Backwaren-Zutatenverbundes die Haftverklebung durch Wasser in relativ kurzer Zeit wieder lösbar ist, so daß ein gleichmäßig und anteilsmäßig gewünschtes Einbringen, Verteilen und Aktivieren aller Backzutaten zur Herstellung eines Endproduktes gewährleistet werden. Dazu trägt nicht zuletzt auch die erfindungsgemäße Einstellung des Wassergehalts des Backwaren-Zutatenverbundes auf 5 bis 15% bei. Andererseits zeichnet sich der erfindungsgemäße Backwaren-Zutatenverbund durch eine hohe Abriebfestigkeit der aufgebrachten Feinstoffe oder Zutaten aus. Dies wird zum einen durch das erfindungsgemäß vorgesehene Haftmittel und zum anderen durch die Aufbringung des Haftmittels unter erhöhter Temperatur von 50 bis 85 °C erreicht. Durch die nachgeschaltete Trocknung des Verbundes wird die Haftverbindung zusätzlich gefestigt und damit die geforderte Abriebfestigkeit entsprechend erhöht.

Das Haftmittel enthält neben Zucker weitere Inhaltsstoffe, wie Konservierungsmittel, Antioxidantien, Honig, Malz, modifizierte Stärke, Dickungsmittel und/oder Zusatzstoffe, wie Emulgatoren, Konservierungsstoffe oder dergleichen, so daß mit dem Haftmittel auch Wirkstoffe in die Mischung eingeführt werden können, die dann bei der Weiterverarbeitung des Backwaren-Zutatenverbundes wieder freisetzbar und aktivierbar sind. Hauptbestandteile des Haftmittels sind neben Wasser noch Zucker, Honig und Malz.

Vorzugsweise können die Feinstoffe, bei denen es sich beispielsweise um Aromastoffe, Quellstoffe, Dickungsmittel, Hydrokolloide, Ballaststoffe, Frucht- und Pflanzenfasern, Spezialmehle, Milchprodukte (z.B. getrocknet), Backmittel, Backhilfsmittel, Antioxidantien, Farbstoffe, Geruchsstoffe, Würzmittel, Gewürze, Geschmacksverstärker, Kräuter, Salze, Säuerungsmittel, Zucker, Vitamine, Fermente oder Emulgatoren handelt, in pulverisierter, granulierter, viskoser, agglomerierter oder flüssiger Form verwendet werden. Auch eine Mischung von Feinstoffen, die in verschiedenen Formen vorliegen, ist möglich. Das Verfahren ist somit universell anwendbar.

Zur besseren Abriebfestigkeit und somit Haftung der Feinstoffe an den Grobstoffen wird vorzugsweise eine Verdichtung des Backwaren-Zutatenverbundes vorgenommen, so daß eine erhöhte Adhäsion der Feinstoffe an den Grobstoffen vorliegt.

Vorzugsweise wird in einem nachgeschalteten Behandlungsschritt der Backwaren-Zutatenverbund einem Veredelungsschritt z.B. in Form einer Oberflächen-Versiegelung unterworfen. Bei der Veredelung wird der Backwaren-Zutatenverbund vorzugsweise mit einer Schicht, insbesondere mit modifizierter Stärke, Gelatine oder dgl. überzogen.

Ist eine Mehrfachbeschichtung vorgesehen, so können die vorgenannten Verfahrensschritte bedarfsgerecht wiederholt werden. Eine Mischung von verschiedenen Zutaten kann ggf. jedoch auch in nur einem Beschichtungsschritt auf die Grobstoffe aufgebracht werden. Zur kontinuierlichen Herstellung des Backwaren-Zutatenverbundes wird bei einer Ausführungsform des Verfahrens ein Fließbettverfahren angewandt, bei dem die Grobstoffe kontinuierlich auf ein Fließbett aufgebracht und das Haftmittel sowie die Feinstoffe jeweils von unten her zugeführt werden. Durch das Wirbelbett schweben die einzelnen Bestandteile und werden besonders gut durchmischt. Ferner werden die Grobstoffe vom Haftmittel auf der gesamten Oberfläche benetzt und die Feinstoffe können sich gleichmäßig anlagern. Des weiteren kann durch dieses Verfahren ein Zusammenkleben der Grobstoffe vor dem Aufbringen der Feinstoffe auf deren Oberfläche verhindert werden.

Bei einer weiteren Ausführungsform des Verfahrens werden die Backwaren-Zutatenverbunde chargenweise hergestellt, wobei ein Behälter, insbesondere ein Fließbettmischbehälter, verwendet wird. Die Grobstoffe werden zuerst in den Behälter eingebracht. Dann werden diesem Behälter von unten her nacheinander das Haftmittel sowie die Feinstoffe zugeführt.

Bei einer weiteren, besonders bevorzugten Ausführungsform des Verfahrens werden zunächst die Grobstoffe in einem Dragierkessel miteinander gemischt. Anschließend wird das als Flüssigstoff vorliegende Haftmittel zugegeben und derart mit den Grobstoffen vermischt, daß die Grobstoffe mit dem Haftmittel möglichst vollständig benetzt werden. Dabei hat es sich als vorteilhaft erwiesen, das Haftmittel mit einer Temperatur von 50 - 85 °C, insbesondere 60 - 75 °C zuzugeben. Schließlich werden auch die Feinstoffe bzw. Zutaten zugeführt und mit den benetzten Grobstoffen vermischt, so daß sich die Feinstoffe bzw. Zutaten an den Grobstoffen anlagern. Vorzugsweise sind die Feinstoffe bzw. Zutaten vorgemischt und gesiebt. Das letztgenannte Verfahren bietet eine äußerst günstige Möglichkeit zur Herstellung eines Backwaren-Zutatenverbundes.

Gemäß Anspruch 12 enthält ein Backwaren-Zutatenverbund mindestens eine Art von Grobstoffen, an deren Oberflächen mindestens eine Art von Feinstoffen mittels eines wasserlösbaren Haftmittels im trockenen Zustand im wesentlichen abriebfest aufgebracht ist, wobei das Haftmittel neben den Hauptbestandteilen Zucker Honig, Malz und Wasser noch weitere Inhaltstoffe aufweist. Durch die Abriebfestigkeit im trockenen Zustand wird ein Entmischen der einzelnen Backwaren-Bestandteile wirkungsvoll verhindert.

Zur Weiterverarbeitung des Backwaren-Zutatenverbundes ist das Haftmittel unter Anwesenheit von Wasser enthaltenden, lebensmittelgerechten Zugabestoffen lösbar, so daß die einzelnen Backwaren-Bestandteile der Mischung mit einem vorbestimmten Mischungsverhältnis in ein Endprodukt einbringbar bzw. zu einem Endprodukt verarbeitbar sind.

Vorzugsweise dienen als Grobstoffe Getreideprodukte, insbesondere Roggenmalzflocken, Weizenflocken, Gerstenflocken oder Dinkelflocken, getrocknete oder kandierte Früchte, getrocknetes Gemüse, und/oder getrocknete Fleisch- oder Fischprodukte. Aber auch andere partikelartige, körnige oder stückige Grobstoffe können verwendet werden.

Aus dem Anspruch 16 kann man ersehen, wie einfach der Backwaren-Zutatenverbund weiterzuverarbeiten ist. Dazu muß nunächst aus gleichen Teilen Wasser und Backwaren-Zutatenverbund ein Quellstück hergestellt werden, indem man diese Zutaten mischt und den dadurch entstehenden Teig dann ruhen läßt. Während der Ruhephase lösen sich die Feinstoffe bzw. Zutaten von den Grobstoffen, so daß ein Teigstück mit einem exakten Mischungsverhälnis von Backzutaten auf einfachste Weise herstellbar ist. Dieses Teigstück wird nach der Ruhephase mit einem Grundteigstück gemischt und verknetet. Der so entstehende Teig kann dann auf herkömmliche Weise weiterverarbeitet werden.

Auf diese Art können beispielsweise aus einem Grundteig nach Teilung und Zugabe jeweils unterschiedlicher Backwaren-Zutatenverbunde schnell und unkompliziert umfangreiche Spezialbackwaren-Sortimente hergestellt werden. Darüber hinaus ist es auch möglich, Konditoreiwaren, Füllungen, Cremes, Fonds, Halbgefrorenes oder Gefrorenes, alles sowohl salzig aus auch süß, mit oben genannen entmischungssicheren Halbfabrikaten schnell und einfach herzustellen.

Die Erfindung wird nachstehend, auch hinsichtlich weiterer Merkmale und Vorteile anhand der Beschreibung von Ausführungsbeispielen unter Bezugnahme auf die beiliegenden Zeichnungen näher erläutert. Die Zeichnungen zeigen in
- Fig. 1: eine schematische Darstellung einer Schrittabfolge eines Fließbettverfahrens zur Herstellung eines entmischungssicheren Backwaren-Zutatenverbundes und
- Fig. 2: eine schematische Darstellung eines Fließbett-Mischbehälters zur erfindungsgemäßen Herstellung des Backwaren-Zutatenverbundes.

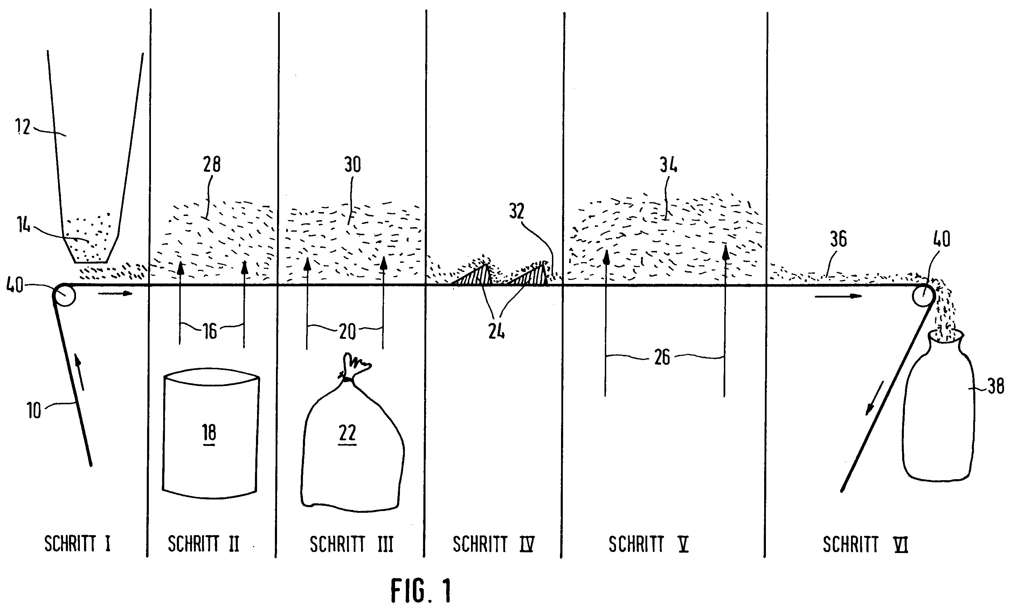

Fig. 1 stellt schematisch eine Schrittabfolge eines Fließbettverfahrens zur kontinuierlichen Herstellung eines entmischungssicheren Backwaren-Zutatenverbundes dar. Die Bezugsziffer 10 bezeichnet ein Förderband, insbesondere ein Lochband, das um zwei Umlenkrollen 40 geführt ist und sich in Pfeilrichtung bewegt.

Im Schritt I wird ein Grobstoff 14 bzw. Grobstoffe über eine Aufbringvorrichtung 12 auf das Förderband 10 aufgebracht. Die einzelnen Partikel bewegen sich auf dem Förderband 10 liegend mit diesem in Pfeilrichtung.

Als Grobstoffe eignen sich unter anderem Getreidekörner oder Getreideprodukte wie z.B. Roggenmalzflocken, Weizenflocken, Gerstenflocken, Dinkelflocken oder auch geschrotete oder anderweitig bearbeitete Getreideprodukte. Ferner können getrocknete oder kandierte Früchte, getrocknetes Gemüse oder getrocknete Fleisch- oder Fischprodukte verwendet werden. Aber auch andere partikelartige, körnige oder stückige Backzutaten, die als Kleinst- oder Kleinpartikel aber auch als Großpartikel vorliegen, können verwendet werden.

Die Aufbringungsrate der Grobstoffe 14 auf das Förderband 10 hängt von der Verarbeitungsgeschwindigkeit nachfolgender Arbeitsprozesse ab.

In Schritt II wird ein Haftmittel 18 von unten durch Öffnungen im Förderband 10 in das bislang nur Grobstoffe 14 enthaltende Fließbett eingebracht, vorzugsweise eingesprüht. Durch das Einsprühen (schematisch durch die Pfeile 16 angedeutet) des Haftmittels 18 befinden sich die Grobstoffe 14 in einem ständigen Schwebezustand und werden an deren Oberfläche vollständig von dem Haftmittel 18 benetzt. Da sie sich ständig bewegen, wird ein Zusammenkleben der einzelnen mit Haftmittel 18 benetzten Grobstoffe 14 (siehe auch Bezugsziffer 28) verhindert.

Das Haftmittel enthält neben Zucker vorzugsweise Inhaltsstoffe, wie Konservierungsmittel, Antioxidantien, Honig, Malz, modifizierte Stärke, Dickungsmittel und/oder andere Zusatzstoffe, wie Emulgatoren, Konservierungsstoffe oder dgl. Erfindungswesentlich ist, daß das Haftmittel 18 durch Wasser, wieder auflösbar ist. Damit können sowohl die im Haftmittel enthaltenen Wirkstoffe als auch die Grobstoffe wie auch die Feinstoffe ihre Wirkung bei der Herstellung des Endproduktes entfalten bzw. in dieses mit einem vorbestimmten Mischungsverhältnis eingebracht werden.

Durch das Weiterbewegung des Förderbandes 10 in Richtung zum Förderbandende werden die mit Haftmittel 18 benetzten Grobstoffe 14 in einen Bereich transportiert, in dem der Verarbeitungsschritt III durchgeführt wird. Dabei werden Feinstoffe bzw. Zutaten 22 ebenfalls von unten in das Fließbett eingeführt, vorzugsweise eingestrahlt (siehe Pfeile 20). Diese lagern sich an den Grobstoffen 14 (siehe auch Bezugsziffer 30) an und bleiben an den Oberflächen der Lebensmittel-Grobstoffe 14 kleben. Beim Schritt III wird somit ein Verbund von Partikeln, bestehend aus den Grobstoffen 14, dem Haftmittel 18 sowie den Feinstofen bzw. Zutaten 22 gebildet.

Die Feinstoffe 22 können in Form von Pulver, Granulat oder als viskose oder flüssige Masse zugegeben werden, so daß das Verfahren universell zu benutzen ist. Insbesondere können die Feinstoffe Aromastoffe, Quellstoffe, Backmittel, Backhilfsmittel, Antioxidantien, Farbstoffe, Geruchsstoffe, Würzmittel, Gewürze, Geschmacksverstärker, Kräuter, Salze, Dickungsmittel, Säuerungsmittel, Zucker, Vitamine, Fermente, Emulgatoren oder dergleichen enthalten.

Die Viskosität und Klebefähigkeit des Haftmittels 18 wird vorzugsweise so eingestellt, daß einerseits eine ausreichend gute Sprüh- und Benetzungsfähigkeit erreicht wird, und andererseits ein Verkleben der Grobstoffe 14 untereinander nicht möglich ist. Dies wird beispielsweise durch Verdünnung des Haftmittels 18 oder durch eine thermische Vorbehandlung desselben erreicht. Des weiteren ist das Haftmittel auf produktspezifische Daten abzustimmen, so daß eine unerwünschte Veränderung und/oder Schädigung der einzelnen Lebensmittelbestandteile vermieden wird. Die Menge des Haftmittels 18 wird vorzugsweise so dosiert, daß nach der Zugabe der Feinstoffe bzw. Zutaten 22 eine vollständige Sättigung erreicht ist, so daß die einzelnen mit Zutaten 22 beschichteten Grobstoffe 14 nicht miteinander verkleben. Das aus Backwaren-Zutatenverbunden bestehende Halbfabrikat bleibt dadurch rieselfähig, womit eine gute Dosierbarkeit sichergestellt ist.

Im Anschluß an Schritt III wird in einem Schritt IV eine stärkere Adhäsion der Feinstoffe 22 an die Grobstoffe 14 mittels Stauelementen 24 erreicht (siehe Bezugsziffer 32). Die Form und die Positionierung dieser Stauelemente kann je nach Bedarf unterschiedlich sein. Bei dem Verfahren ist lediglich sicherzustellen, daß kein allzu starkes Aufstauen und damit Überfluten des Backwaren-Halbfabrikats vor den Stauelementen erfolgt. Die Stauelemente 24 sind in der vorliegenden Ausführungsform knapp oberhalb des Förderbands 10 fest angeordnet und mit im wesentlichen dreieckiger Querschnittsform ausgebildet. Alternativ können auch andere Stauelemente verwendet werden oder diese auch entfallen. Die dadurch bewirkte Verdichtung kann bis zu 40 Prozent betragen.

In Schritt V ist gemäß der vorliegenden Ausführungsform ein weiterer Verfahrensschritt dargestellt, in dem eine Trocknung und/oder eine Veredelung des Backwaren-Zutatenverbundes durchgeführt wird. Vorstellbar ist auch eine chemische oder eine biologische, beispielsweise enzymatische Behandlung.

Die zur Behandlung benötigten Stoffe werden von unten (siehe Pfeile 26) in das Fließbett eingebracht und dienen beispielsweise zur Erhöhung der Haltbarkeit, Veredelung oder Einstellung des Wassergehalts.

Auch eine Kombination mehrerer Behandlungsschritte ist denkbar.

Bei Bedarf ist eine Wiederholung der vorgenannten Schritte zum Aufbringen von weiteren Zutaten 22 auf den bislang entstandenen Backwaren-Zutatenverbund möglich.

In einem letzten Schritt, Schritt VI, wird das fertiggestellte aus den Backwaren-Zutatenverbunden bestehende Backwaren-Halbfabrikat 36 in einen Behälter 38, dessen Größe beliebig gewählt werden kann, abgefüllt.

Die Schritte IV und V können gegebenenfalls auch entfallen.

Die Mischungsverhältnisse der einzelnen Bestandteile des Backwaren-Halbfabrikats werden genau bestimmt, so daß bei der Verwendung des Halbfabrikats zur Weiterverarbeitung ein gewünschtes Verhältnis von Grobstoffen, Inhaltsstoffen bzw. Zusatzstoffen und Feinstoffen bzw. Zutaten vorliegt.

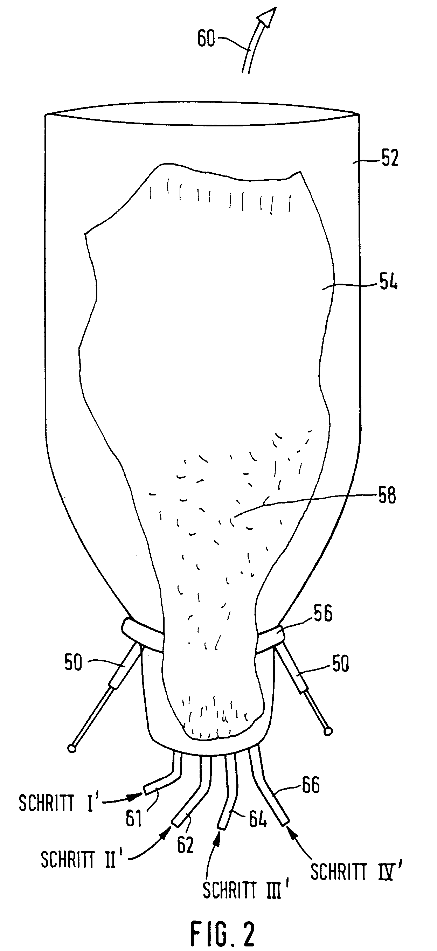

Gemäß Fig. 2 ist ein alternatives Verfahren zur chargenweise Herstellung eines entmischungssicheren Backwaren-Zutatenverbundes dargestellt.

Die nacheinanderfolgend ablaufenden Verfahrensschritte sind den Verfahrensschritten der ersten Ausführungsform für ein Verfahren zur kontinuierlichen Herstellung eines entmischungssicheren Backwaren-Zutatenverbundes ähnlich.

In Fig. 2 ist ein Fließbett-Mischbehälter 52, derart mit einer weggebrochenen Frontseitenwand dargestellt, daß ein Blick in das Innere 54 des Behälters 52 möglich ist. Der Behälter 52 ist durch Stützen 50 und einen Haltering 56 gehalten. Von unten führen gemäß der vorliegenden Ausführungsform vier Zuleitungsrohre 61 bis 66 in den Behälter, über die die verschiedenen Zugabestoffe, beispielsweise Grobstoffe, Haftmittel und Feinstoffe bzw. Zutaten, zugeführt werden können. Nach oben ist der Behälter 52 offen, so daß die Abluft, wie durch den Pfeil 60 dargestellt, entweichen kann.

In einem ersten Verfahrensschritt I' wird eine bestimmte Menge eines Grobstoffes bzw. von Grobstoffen über die Zuleitung 61 in den Behälter 52 eingebracht.

Anschließend wird in Schritt II' über die Zuleitung 62 eine vorbestimmte und auf die Menge der Grobstoffe abgestimmte Menge des Haftmittels zugeführt, wobei sich die Grobstoffe im Innenraum 54 des Behälters 52 in Schwebe befinden und das Haftmittel die Oberfläche gleichmäßig benetzt. Durch das Fließbettverfahren wird auch hier ein Verkleben der einzelnen Grobstoffe miteinander verhindert.

Im anschließenden Schritt III' werden dann die Feinstoffe bzw. Zutaten über die Zuleitung 64 in den Behälter 52 befördert. Sie lagern sich an den Oberflächen der Grobstoffe an und werden durch das Haftmittel entmischungssicher gehalten.

Im Schritt V' kann über die Zuleitung 66 schließlich analog wie beim vorhergehenden Ausführungsbeispiel eine Behandlung zur Erhöhung der Haltbarkeit, der Veredelung oder der Einstellung des Wassergehalts oder dergleichen durchgeführt werden.

Während des gesamten Verfahrens kann die Abluft über die obere Öffnung des Behälters entweichen (siehe Pfeil 60).

Nach der Herstellung einer Charge eines aus einem entmischungssicheren Backwaren-Zutatenverbund bestehenden Halbfabrikats wird der Haltering 56 gelöst und der Behälter 52 abgenommen, so daß dessen Inhalt in ein Vorratsbehältnis abgefüllt werden kann.

Ein weiteres Verfahrensbeispiel zur Herstellung des Backwaren-Zutatenverbundes wird nachfolgend ohne Bezugnahme auf Zeichnungen angegeben. Gegenüber den oben beschriebenen Fließbettverfahren ist es einfacher und auch kostengünstiger.

Als Arbeitsvorrichtung wird für dieses Verfahren lediglich ein Dragierkessel benötigt. In diesen Kessel werden zunächst die Grobstoffe gegeben, wie sie auch in den oben beschriebenen Ausführungsbeispielen verwendet werden. Um eine gute Durchmischung der Grobstoffe zu erreichen, werden diese etwa 2 Minuten miteinander vermischt. Bei einem bevorzugten Backwaren-Zutatenverbund umfassen die Grobstoffe Roggenmalzflocken, Weizenflocken, Gerstenflocken und Dinkelflocken, und die Grobstoffmenge entspricht etwa 60 - 80 % der Gesamtmenge des Backwaren-Zutatenverbundes.

Anschließend setzt man der Grobstoffmischung das Haftmittel zu, welches als Flüssigstoff vorliegen sollte. Das Haftmittel kann wie vorgenannt beschrieben zusammengesetzt sein und beispielsweise die Hauptbestandteile Malz, Honig, Wasser und Zucker aufweisen. Bei dem bevorzugten Ausführungsbeispiel entspricht die Flüssigstoffmenge etwa 6 - 18 % der Gesamtmenge des Backwaren-Zutatenverbundes. Als besonders vorteilhaft hat sich herausgestellt, wenn das Haftmittel mit einer Temperatur von 65 - 85 °C der Grobstoffmischung zugefügt wird. Die erhöhte Temperatur gewährleistet eine gute und vollständige Benetzung der Grobstoffe mit dem Haftmittel. Zur Erziehlung einer solchen vollständigen Benetzung sollten die Grobstoffe und das Haftmittel etwa 3 Minuten im Dragierkessel miteinander vermischt werden. Nach diesem Verfahrensschritt sind alle Grobstoffe gleichmäßig mit dem Haftmittel überzogen, so daß nunmehr die Feinstoffe angelagert werden können.

Die Feinstoffe, die im nächsten Verfahrensschritt dem Dragierkessel mit einem Gewichtsanteil von etwa 12 - 25 % zugegeben werden, können beispielsweise Frucht- und Pflanzenfasern als Wasserbindemittel und Ballaststoffe enthalten. Ferner können als Feinstoffe Gewürze, Fruchtpulver, insbesondere Vitamin C, und Trockenmalze für Geschmack und Farbe und als Backhilfsmittel verwendet werden. Nicht zuletzt können auch Spezialmehle wie Hirse- und Gerstenmehl als Geschmacksgeber und Backhilfe zugeführt werden.

Die Feinstoffe, die den benetzen Grobstoffen zugegeben werden, sind vorgemischt. Als vorteilhaft hat es sich herausgestellt, die Feinstoffe auf etwa 1mm zu sieben. Nach der Zugabe der Feinstoffe wird das Gemisch aus den benetzten Grobstoffen und den Feinstoffen etwa 7 Minuten miteinander vermischt. In diesem Zeitraum lagern sich die Feinstoffpartikel gleichmäßig und dicht and die Grobstoffpartikel an. Dabei bleibt das Gesamtprodukt frei fließend. Durch das intensive Mischen wird einerseits eine Bildung von Agglomeraten verhindert, andererseits eine Pressverklebung der Feinstoffe mit den Grobstoffen bewirkt.

In einem nächsten Verfahrensschritt wird das Produkt aus dem Dragierkessel ausgeladen und dis- oder kontinuierlich gefrierluft- oder vakuumgetrocknet. Dabei sollte aus Haltbarkeitsgründen eine Restfeuchte von etwa 5 - 15 % angestrebt werden. Damit der fertige Backwaren-Zutatenverbund kein Wasser aus der Luft aufnimmt, sollte das Halbfabrikat ferner vor Luftfeuchte geschützt und in einer luftdichten Verpackung gelagert werden.

Die Weiterverarbeitung des Backwaren-Zutatenverbundes ist denkbar einfach.

Zunächst wird ein Quellstück hergestellt. Dazu gibt der Backwarenhersteller gleiche Teile des Halbfabrikats und Wasser zusammen, vermischt beide Zutaten und läßt den Teig eine bestimmte Zeit quellen. Die Quellzeit zur Bildung der Quellstücke ist von der Quelltemperatur abhängig und kann der folgenden Tabelle entnommen werden:

| Quelltemperatur | Quellzeit |
|---|---|
| bei 30 °C | etwa 6 Std. |
| bei 50 °C | etwa 3 Std. |
| bei 70 °C | etwa 2 Std. |
| kochend | etwa 1 Std. |

Nach dem Herstellen des Quellstücks wird dieses einem Grundteig zugegeben, der beispielsweise von einer großen Masse eines Grundteigs (z.B. Weizenmischbrotteig) der täglichen Herstellung abgenommen worden ist. Beispielsweise bei der Brotherstellung wird - bei einer bevorzugten Ausführungsform - 1/3 Gewichtsanteil Quellstück 2/3 Gewichtsanteilen Grundteig zugegeben; also bei einer gewünschten Gesamtteigmenge von 15 kg werden 5 kg Quellstück für 10 kg Grundteig verwendet. Bei der Herstellung von Brötchenteig kann das Mischungsverhältnis etwa 1/4 Quellstück zu 3/4 Grundteig betragen.

Das Quellstück und der Grundteig werden etwa 4 Minuten in einem Kneter durchgearbeitet. Nachdem dieser aus Quellstück und Grundteig bestehende Endteig etwa 5 bis 10 Minuten "angesprungen" ist, kann er in der üblichen Weise zu einer Spezialbackware weiterverarbeitet werden.

Bei hochprozentigen Weizenteigen kann der Endteig nach einer verlängerten Stehzeit ohne weiteres kühl weiterverarbeitet werden. Notfalls kann über die Temperatur des Quellstücks die Temperatur beeinflußt werden. Anders ist dies bei hochprozen-tigen Roggenteigen. Hierbei sollte der abgenommene Grundteig warmgestellt und das Quellstück heiß mit nur zweistündiger Quellzeit angesetzt werden (Brühstück). Wertvolle Tips zur Teigherstellung können der nachfolgenden Tabelle entnommen werden.

| Weizen- und Mischbrotteige | Mischbrotteige von | Misch- und Roggenbrotteige |
|---|---|---|
| bis zu 30 % Roggen | 40 % bis 60 % Roggen | ab 70 % Roggen |
| 24° - 27°C | 26° - 28°C | 30° - 34°C |
| ca. 5 Minuten intensiv kneten | ca 8 Minuten langsam kneten | ca. 8 Minuten langsam kneten |
| Teigruhe ca. 10 min | Teigruhe ca. 15 min | Teigruhe ca. 25 min |
| oder länger, dann ca. 4 min 2. Laufzeit | oder länger, dann ca. 4 min 2. Laufzeit | oder länger, dann ca 4 min 2. Laufzeit |

Mit einer Vielzahl von vorbeschriebenen Backwaren-Zutatenverbunden - beispielsweise können Ein- oder Mehrkorn-, Kern-, Samen- oder Fruchtmischungen bzw. -füllungen verschiedenster Zusammensetzungen und Rezeptierung mit haftverklebten Feinstoffen bzw. Zutaten wie beispielsweise Geschmacks- und Aromastoffen, Quellstoffen, Backmitteln, Backhilfsmitteln und/oder anderen Zutaten kombiniert werden -, ist es somit möglich auf einfache Weise ein umfangreiches Spezialbackwaresortiment schnell herzustellen. Dazu müssen lediglich verschiedene Quellstücke angesetzt werden, die dann einem abgenommenen Grundteig zugegeben werden. Der entmischungssichere Backwaren-Zutatenverbund stellt dabei sicher, daß das Mischungsverhältnis genau eingehalten wird und die jeweilige Backware immer mit gleichem Geschmack und reproduzierbaren Eigenschaften herstellbar ist.

## Patentansprüche

1. Verfahren zur Herstellung eines rieselfähigen Backwaren-Zutatenverbundes (36), welcher als Halbfabrikat bei der Herstellung von Backwaren, kalt- oder warmgebundenen, halb- oder gefrorenen Nahrungs- oder Genußmitteln verwendet wird, bestehend aus
- mindestens einer Art von partikelartigen, insbesondere körnigen oder stückigen Grobstoffen (14) einerseits sowie
- mindestens einer Art von geschmacksbeeinflussenden, die Verarbeitungsfähigkeit des herzustellenden Endproduktes fördernden, die Haltbarkeit des Backwaren-Zutatenverbundes bzw. des Endprodukts verlängernden, die Geschmacksvielfalt erweiternden oder dgl. Feinstoffen oder Zutaten (22) andererseits,
a) wobei zunächst ein wasserlösliches und Zucker enthaltendes Haftmittel (18) auf die Oberfläche mindestens eines Teils der Grobstoffe (14) aufgebracht wird; und dann
b) die so behandelten Grobstoffe (14) mit den Feinstoffen bzw. Zutaten (22) so vermischt werden, daß die Feinstoffe (22) im wesentlichen abriebfest und dementsprechend entmischungssicher auf der Oberfläche der Grobstoffe (14) haften bleiben,
dadurch **gekennzeichnet,**
daß das Haftmittel (18) neben Zucker weitere Inhaltsstoffe, wie Konservierungsmittel, Antioxidantien, Honig, Malz, modifizierte Stärke, Dickungsmittel, und/oder Zusatzstoffe, wie Emulgatoren, Konservierungsstoffe oder dgl. enthält,
daß ein solches Haftmittel (18) unter einer Temperatur von 50 °C bis 85 °C zugefügt wird, und
daß nach dem Vermischen der Grobstoffe (14) mit den Feinstoffen (22) der Verbund unter Einstellung eines vorbestimmten Wassergehalts von 5 - 15% getrocknet wird.

2. Verfahren nach Anspruch 1,
dadurch **gekennzeichnet,**
daß Feinstoffe bzw. Zutaten (22) in pulverisierter, granulierter, viskoser, agglomerierter oder flüssiger Form verwendet werden.

3. Verfahren nach Anspruch 1 oder 2,
dadurch **gekennzeichnet,**
daß nach dem Vermischen der Grobstoffe (14) mit den Feinstoffen (22) eine mechanische Verdichtung des Verbundes erfolgt, um eine erhöhte Adhäsion der Feinstoffe (22) an den Grobstoffen (14) zu erhalten, wobei die Verdichtung vorzugsweise mindestens etwa 20 - 25%, insbesondere bis zu etwa 40% beträgt.

4. Verfahren nach einem der Ansprüche 1 bis 3,
dadurch **gekennzeichnet,**
daß der Zutaten-Verbund einer Veredelung zur Versiegelung der Oberfläche unterzogen wird, wobei bei der Veredelung der Zutaten-Verbund mit einer Schicht, insbesondere modifizierter Stärke, Gelatine oder dgl., überzogen wird.

5. Verfahren nach einem der Ansprüche 1 bis 4,
dadurch **gekennzeichnet,**
daß zum Zwecke einer Mehrfachbeschichtung die vorgenannten Verfahrensschritte bedarfsgerecht wiederholt werden.

6. Verfahren nach einem der Ansprüche 1 bis 5,
dadurch **gekennzeichnet,**
daß die Herstellung des Backwaren-Zutatenverbundes kontinuierlich erfolgt, insbesondere nach einem Fließbettverfahren, bei dem die Grobstoffe (14) kontinuierlich auf ein Fließbett (10) aufgebracht und das Haftmittel (18) sowie die Feinstoffe bzw. Zutaten (22) jeweils von unten her zugeführt werden.

7. Verfahren nach einem der Ansprüche 1 bis 5,
dadurch **gekennzeichnet,**
daß die Herstellung des Backwaren-Zutatenverbundes chargenweise erfolgt, derart, daß eine vorbestimmte Menge von Grobstoffen (14) in einen Behälter (52), insbesondere den Behälter eines Fließbettmischers, eingebracht wird, um dann in diesem Behälter (52) mit vorzugsweise von unten her zugeführtem Haftmittel (18) sowie vorzugsweise von unten her zugeführten Feinstoffen bzw. Zutaten (22) vermischt oder verknetet zu werden.

8. Verfahren nach einem der Ansprüche 1 bis 4,
dadurch **gekennzeichnet,**
- daß zunächst die Grobstoffe (14) in einem Behälter, insbesondere einem Dragierkessel, miteinander gemischt werden,
- anschließend das als Flüssigstoff vorliegende Haftmittel (18) den gemischten Grobstoffen (14) zugegeben und mit diesen gemischt wird und
- schließlich die vorzugsweise vorgemischten und gesiebten Feinstoffe bzw. Zutaten (22) den mit dem Haftmittel (18) benetzten Grobstoffen (14) zugesetzt und mit diesen vermischt werden.

9. Verfahren nach Anspruch 8,
dadurch **gekennzeichnet,**
daß die Grobstoffe bis zu 7 Minuten, vorzugsweise 1 bis 3 Minuten, insbesondere 2 Minuten miteinander vermischt werden.

10. Verfahren nach Anspruch 8 oder 9,
dadurch **gekennzeichnet,**
daß das Haftmittel (18) vor der Zugabe auf 60 - 75 °C erwärmt und zur Benetzung der Grobstoffe (14) bis zu 7 Minuten, vorzugsweise 1 bis 5 Minuten, insbesondere 3 Minuten mit diesen vermischt wird.

11. Verfahren nach einem der Ansprüche 8 bis 10,
dadurch **gekennzeichnet,**
daß die Feinstoffe bzw. Zutaten (22) bis zu 15 Minuten, vorzugsweise 2 bis 12 Minuten, insbesondere 7 Minuten, mit den benetzten Grobstoffen vermischt werden.

12. Backwaren-Zutatenverbund zur Verwendung als Halbfabrikat bei der Herstellung von Backwaren, insbesondere Brot, bestehend aus partikelartigen, insbesondere körnigen oder stückigen Grobstoffen (14) einerseits und Lebensmittel-Feinstoffen bzw. Zutaten (22) andererseits, insbesondere hergestellt nach einem Verfahren gemäß einem oder mehreren der Ansprüche 1 bis 11,
dadurch **gekennzeichnet,** daß
er mindestens eine Art von Grobstoffen (14) umfaßt, an deren Oberflächen mindestens eine Art von Feinstoffen bzw. Zutaten (22) mittels eines wasserlösbaren Haftmittels (18) aufgebracht sind, wobei das Haftmittel (18) neben den Hauptbestandteilen Zucker, Honig, Malz und Wasser weitere Inhaltsstoffe wie Konservierungsmittel, Antioxidantien, modifizierte Stärke, Dickungsmittel und/oder Zusatzstoffe, wie Emulgatoren, Konservierungsstoffe oder dgl. enthält, und daß der so hergestellte Verbund auf eine Restfeuchte von 5 - 15% getrocknet ist.

13. Backwaren-Zutatenverbund nach Anspruch 12,
dadurch **gekennzeichnet,**
daß die Feinstoffe bzw. Zutaten (22) bei Weiterverarbeitung des Backwaren-Zutatenverbundes und unter Anwesenheit von Wasser enthaltenden, lebensmittelgerechten Zugabestoffen ablösbar sind, so daß sie auf diese Weise mit einem vorbestimmtem Mischungsverhältnis zu einem Endprodukt verarbeitbar sind.

14. Backwaren-Zutatenverbund nach Anspruch 12 oder 13,
dadurch **gekennzeichnet,**
daß als Grobstoffe (14) Getreideprodukte, wie Roggenmalzflocken, Weizenflocken, Gerstenflocken oder Dinkelflocken, getrocknete oder kandierte Früchte, getrocknetes Gemüse, getrocknete Fleisch- oder Fischprodukte oder dgl. dienen.

15. Backwaren-Zutatenverbund nach Anspruch 9 oder 10,
dadurch **gekennzeichnet,**
daß die Feinstoffe bzw. Zutaten (22) als Pulver, Granulat oder als viskose oder flüssige Masse vorliegen und Aromastoffe, Quellstoffe, Backmittel, Backhilfsmittel, Antioxidantien, Farbstoffe, Geruchsstoffe, Würzmittel, Gewürze, Geschmacksverstärker, Kräuter, Salze, Dickungsmittel, Säuerungsmittel, Zucker, Vitamine, Fermente, Emulatoren oder dgl. enthalten.

16. Verwendung eine Backwaren-Zutatenverbundes gemäß einem der Ansprüche 12 bis 15 zur Herstellung von Backwaren, insbesondere Brot,
**gekennzeichnet** durch die Schritte,
daß der Backwaren-Zutatenverbund mit Wasser vermischt wird und der dadurch entstehende Teig anschließend für eine von der Temperatur abhängige Zeitdauer zur Bildung eines Quellstückes ruht, wobei sich dabei das Haftmittel im Wasser löst und dadurch die Feinstoffe bzw. Zutaten (22) von den Grobstoffen (14) abgelöst werden,
daß das Quellstück einem Grundteig zugegeben und mit diesem vermischt oder verknetet wird, und
daß der so entstandene Teig in herkömmlicher Weise weiterverarbeitet wird.

17. Verfahren nach Anspruch 16,
dadurch **gekennzeichnet,**
daß der aus Quellstück und Grundteig bestehende Teig vor der Weiterverarbeitung ruht.

18. Verfahren nach Anspruch 16 oder 18,
dadurch **gekennzeichnet,**
daß zur Bildung des Quellstückes Wasser in einer solchen Menge zugegeben wird, daß dessen Gewicht dem Gewicht der Backwaren-Zutatenverbundmenge entspricht.

## Claims

1. Method of manufacturing a pourable ingredient compound for bakery products (36) which is used as a semi-finished product in the manufacture of bakery products, basic or luxury foods, which are bound together either cold or warm and which are chilled or frozen, consisting of
- at least one kind of particle-like, especially granular or pelleted, coarse substance (14) on the one hand as well as of
- on the other hand, at least one kind of fine substance or ingredient (22) which influences the taste, furthers the processing capability of the end product to be manufactured, lengthens the storage life of the bakery ingredient compound or of the end product, extends the diversity of taste or the like,
a) a water-soluble bonding agent (18) containing sugar being first applied to the surface of at least a portion of the coarse substances (14); and then
b) the coarse substances (14) treated in this way being mixed with the fine substances or ingredients (22) in such a way that the fine substances remain essentially abrasion-resistant and correspondingly secure against demixing on the surface of the coarse substances (14),
**characterised in that,**
the binding agent (18) contains besides sugar other ingredients such as preservatives, antioxidants, honey, malt, modified starch, thickeners and/or additives such as emulsifiers, preserving agents or the like,
in that a binding agent (18) of this sort is added at a temperature of 50°C to 85°C, and
in that, after the coarse substances (14) have been mixed with the fine substances (22), the compound is dried with a pre-determined water content set at from 5 - 15%.

2. Method according to claim 1,
**characterised in that**
fine substances or ingredients (22) are used in powdered, granulated, viscous, agglomerated or liquid form.

3. Method according to claim 1 or 2,
**characterised in that**
after the coarse substances (14) have been mixed with the fine substances (22), there is a mechanical compression of the compound in order to obtain an increased adhesion of the fine substances (22) to the coarse substances, the compression amounting preferably to at least approximately 20 - 25%, especially up to about 40%.

4. Method according to one of claims 1 to 3,
**characterised in that**
the ingredient compound is subjected to processing to seal the surface, the ingredient compound being coated during this processing with a layer, especially modified starch, gelatine or the like.

5. Method according to one of claims 1 to 4,
**characterised in that**
the above process steps are repeated as needed for the purposes of multiple layering.

6. Method according to one of claims 1 to 5,
**characterised in that**
the manufacture of the bakery ingredient compound is a continuous process, especially a fluidized bed process, in which the coarse substances (14) are applied continuously to a fluidized bed (10) and the binding agent (18) as well as the fine substances or ingredients (22) are in each case introduced from below.

7. Method according to one of claims 1 to 5,
**characterised in that**
the manufacture of the bakery ingredient compound takes place in batches, in such a way that a predetermined amount of coarse substances (14) is brought into a container (52), especially the container of a fluidized bed mixer, in order then to be mixed or kneaded in this container (52) with binding agent (18) preferably introduced from below as well as fine substances or ingredients (22) preferably introduced from below.

8. Method according to one of the claims 1 to 4,
**characterised in that**
- first of all, the coarse substances (14) are mixed with one another in a container, especially a dragée kettle,
- then the binding agent (18) present as a liquid is added to the mixed coarse substances (14) and mixed with these and
- finally the preferably pre-mixed and sieved fine substances or ingredients (22) are added to the coarse substances (14) which have been moistened by the binding agent (18) and mixed with them.

9. Method according to claim 8,
**characterised in that**
the coarse substances are mixed with one another for up to 7 minutes, preferably for 1 to 3 minutes, especially 2 minutes.

10. Method according to claim 8 or 9,
**characterised in that**
before being added, the binding agent (18) is warmed up to 60 - 75°C and mixed with the coarse substances (14), to moisten them, for up to 7 minutes, preferably for 1 to 5 minutes, especially 3 minutes.

11. Method according to one of claims 8 to 10,
**characterised in that**
the fine substances or ingredients (22) are mixed with the moistened coarse substances for up to 15 minutes, preferably for 2 to 12 minutes, especially 7 minutes.

12. Ingredient compound for bakery products, to be used as a semi-finished product in the manufacture of bakery products, especially bread, consisting of particle-like, especially granular or pelleted coarse substances (14) on the one hand and of food fine substances or ingredients (22) on the other hand, especially manufactured according to a method in accordance with one or more of the claims 1 to 11,
**characterised in that**
it incorporates at least one type of coarse substance (14), on the surfaces of which at least one type of fine substance or ingredient (22) is applied by means of a water-soluble binding agent (18), the binding agent (18) containing, besides its main components sugar, honey, malt and water, additional ingredients such as preservatives, antioxidants, modified starch, thickeners and/or additives such as emulsifiers, preserving agents or the like, and in that the compound manufactured in this way is dried to a residual moisture of 5 - 15%.

13. Ingredient compound for bakery products according to claim 12,
**characterised in that**
the fine substances or ingredients (22) can be detached in the further processing of the bakery ingredient compound if added substances suitable for food and containing water are present, so that in this way they can be processed with a predetermined mixture ratio into an end product.

14. Ingredient compound for bakery products according to claim 12 or 13,
**characterised in that**
cereal products such as rye malt flakes, wheat flakes, barley flakes or spelt flakes, dried or candied fruit, dried vegetables, dried meat or fish products or the like serve as coarse substances (14).

15. Ingredient compound for bakery products according to claim 9 or 10,
**characterised in that**
the fine substances or ingredients (22) are present as powder, as granules or as a viscous or liquid mass and contain flavours, rising agents, baking agents and aids, antioxidants, colourings, aromatic essences, seasonings, spices, taste enhancers, herbs, salts, thickeners, leavening agents, sugar, vitamins, enzymes, emulsifiers or the like.

16. Use of an ingredient compound for bakery products in accordance with one of claims 12 to 15 for the manufacture of bakery products, especially bread,
**characterised by the steps,**
that the bakery ingredient compound is mixed with water and the resultant dough then rests for a period depending on the temperature to form a rising piece, during which period the binding agent dissolves in the water and the fine substances or ingredients (22) are thus detached from the coarse substances (14),
that the rising piece is added to a basic dough and mixed or kneaded with same, and
that the dough produced in this way is then further processed in traditional manner.

17. Method according to claim 16,
**characterised in that**
the dough consisting of the rising piece and the basic dough rests before further processing.

18. Method according to claim 16 or 18,
**characterised in that**
to form the rising piece, water is added in such an amount that its weight corresponds to the weight of the amount of the bakery ingredient compound.

## Revendications

1. Procédé de fabrication d 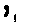 un mélange d 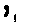 ingrédients de boulangerie (36) apte à s 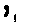 écouler et pouvant être utilisé comme produit intermédiaire pour la fabrication de produits de boulangerie, de produits alimentaires ou produits de consommation congelés ou semi-congelés, assemblés à froid ou à chaud, ce mélange comprenant
- d 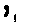 une part au moins une sorte de produit à gros grains (14) de type en particules, en particulier en grain de céréales ou en morceaux, ainsi que
- d 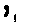 autre part au moins une sorte de produit à grains fins ou ingrédient (22) susceptible d 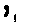 influencer le goût, ou nécessaire à la faisabilité du traitement pour un produit final à fabriquer, susceptible de prolonger la tenue des mélanges d 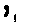 ingrédients de boulangerie, respectivement du produit final, ou susceptible d 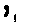 élargir la gamme de goûts, procédé par lequel
a) on amène d 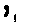 abord un liant (18) non aqueux et contenant du sucre sur la couche superficielle d 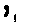 au moins une partie du produit à gros grains (14), et ensuite
b) on mélange le produit à gros grains (14) ainsi traité avec le produit à grains fins, respectivement les ingrédients, (22) de telle sorte que ce produit à grains fins (22) reste retenu sur la surface superficielle du produit à gros grains (14) de manière à résister sensiblement au frottement et de ce fait à constituer un mélange fiable
caractérisé en ce que
le liant (18) contient, outre le sucre, d 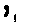 autres produits d 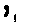 ingrédients tels que des produits de conservation, des anti-oxydants, du miel, du malte, de l 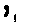 amidon modifié, des produits épaississants et/ou des produits de remplacement, tels que des émulsifiants, des agents de conservation ou similaires,
en ce qu 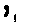 un tel liant (18) est amené à une température comprise entre 50°C et 85°C, et en ce que, après avoir mélangé le produit à gros grains (14) avec le produit à grains fins (22), ce mélange est séché jusqu 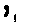 à atteindre une hydrométrie prédéterminée comprise entre 5 % et 15 %.

2. Procédé selon la revendication 1, caractérisé en ce que les produits à grains fins, respectivement les ingrédients, (22) sont utilisés sous une forme liquide ou agglomérée ou visqueuse ou granuleuse ou pulvérulente.

3. Dispositif selon la revendication 1 ou 2, caractérisé en ce que le mélange du produit à gros grains (14) avec le produit à grains fins (22) subit une compression mécanique pour augmenter l 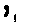 adhésion du produit à grains fins (22) sur le produit à gros grains (14), cette compression étant comprise avantageusement au moins entre 20 % et 25 %, de préférence au-delà de 40 %.

4. Procédé selon l 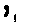 une des revendications 1 à 3, caractérisé en ce que le mélange d 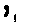 ingrédients subit un affinage pour imprégnation de la couche superficielle, affinage par lequel le mélange d 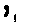 ingrédients est recouvert d 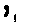 une couche, plus particulièrement d 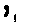 amidon modifié, de gélatine ou analogue.

5. Procédé selon l 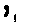 une des revendications 1 à 4, caractérisé en ce que les étapes de procédé précédentes sont répétées selon le besoin dans le but d 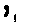 un recouvrement à plusieurs couches.

6. Procédé selon l 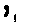 une des revendications 1 à 5, caractérisé en ce que la fabrication du mélange d 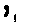 ingrédients de boulangerie s 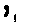 effectue en continu, et en particulier selon un procédé sur convoyeur, procédé par lequel le produit à gros grains (14) est amené en continu sur le convoyeur (10) et par lequel le liant (18) ainsi que le produit à grains fins, respectivement les ingrédients, (22) sont chacun amenés par en dessous.

7. Procédé selon l 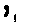 une des revendications 1 à 5 caractérisé en ce que la fabrication du mélange d 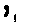 ingrédients de boulangerie est effectuée par chargements, par lequel une quantité prédéterminée de produits à gros grains (14) est amenée dans un conteneur (52), plus particulièrement un conteneur d 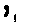 un mélangeur en continu, pour être par la suite mélangée ou pétrie dans ce conteneur (52) avec un liant (18) avantageusement amené par en dessous ainsi qu 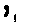 avec des produits à grains fins, respectivement ingrédients, (22) également amenés avantageusement par en dessous.

8. Procédé selon l 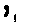 une des revendications 1 à 4, caractérisé en ce que
- les produits à gros grains (14) sont d 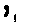 abord mélangés ensemble dans un conteneur, en particulier une enceinte Dragier
- en ce que le liant (18) sous forme fluidique est amené aux produits à gros grains mélangés (14), et est mélangé avec celui-ci, et
- finalement, le produit à grains fins, respectivement les ingrédients, (22) préalablement mélangés et tamisés sont apportés aux produits à gros grains (14) recouverts de liant (18), et sont mélangés avec celui-ci.

9. Procédé selon la revendication 8, caractérisé en ce que les produits à gros grains sont mélangés entre eux pendant 7 minutes, avantageusement entre 1 et 3 minutes, et en particulier 2 minutes.

10. Procédé selon la revendication 8 ou 9, caractérisé en ce que le liant (18) est chauffé entre 60° C et 75° C avant d'être apporté, et en ce qu 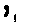 il est mélangé lors de son utilisation avec le produit à gros grains (14) pendant au plus 7 minutes, avantageusement entre 1 et 5 minutes, et plus particulièrement pendant 3 minutes.

11. Procédé selon l 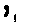 une des revendications 8 à 10, caractérisé en ce que le produit à grains fins, respectivement ingrédients, (22) est mélangé avec le produit à gros grains enduits pendant au plus 15 minutes, avantageusement entre 2 à 12 minutes et en particulier pendant 7 minutes.

12. Mélange d 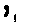 ingrédients de boulangerie pour utilisation en tant que produit intermédiaire lors de la fabrication de produits de boulangerie, en particulier de pain, comprenant d 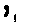 une part un produit à gros grains (14) de type en particules, en particulier en grain de céréales ou en morceaux, et d 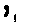 autre part un produit à grains fins alimentaires, respectivement un ingrédient, (22) ce mélange étant plus particulièrement fabriqué suivant un procédé selon l 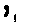 une ou plusieurs des revendications 1 à 11,
caractérisé en ce qu 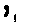 il comprend
au moins une sorte de produit à gros grains (14) sur la surface superficielle duquel est amenée au moins une sorte de produit à grains fins, respectivement d 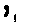 ingrédients (22), au moyen d 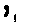 un liant (18) non aqueux dans lequel le liant (18), outre une partie principale de sucre, contient également du miel, du malte et d 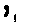 autres produits contenant de l 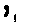 eau, tels que les produits de conservation, des anti-oxydants, de l 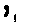 amidon modifié, des produits épaississants et'ou des produits de remplacement tels que des émulsifiants, des agents de conservation ou similaires ; et en ce que le mélange ainsi obtenu est séché jusqu'à atteindre une hydrométrie résiduelle de 5 % à 15%.

13. Mélange d 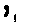 ingrédients de boulangerie selon la revendication 12, caractérisé en ce que les produits à grains fins, respectivement les ingrédients, (22) sont séparables lors du traitement ultérieur du mélange d 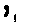 ingrédients de boulangerie et ceci en présence de produits supplémentaires alimentaires contenant de l 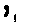 eau, de telle sorte qu 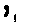 ils puissent être travaillés de cette façon en un produit final avec un rapport de mélange prédéterminé.

14. Mélange d 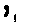 ingrédients de boulangerie selon la revendication 12 ou 13, caractérisé en ce qu 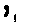 on utilise en tant que produit à gros grains (14) des produits céréales tels que des flocons de seigle, des flocons de froment, des flocons d 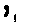 orge ou des flocons d 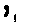 épeautre, des fruits séchés ou confits, des légumes séchés, des produits de viande ou de poisson séchés.

15. Mélange d 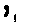 ingrédients de boulangerie selon la revendication 9 ou 10, caractérisé en ce que les produits à grains fins, respectivement ingrédients, (22) se présentent en masse fluide ou visqueuse ou granuleuse ou pulvérulente, et contiennent des arômes, des produits de gonflement, des levures, du levain, des anti-oxydants, des colorants, des produits de parfum, des produits de saveur, des épices, des produits de renfort de goût, des herbes, du sel, un épaississant, un acidifiant, du sucre, des vitamines, des ferments, des émulsifiants ou similaires.

16. Utilisation d 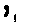 un mélange d 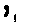 ingrédients de boulangerie selon l 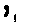 une des revendications 12 à 15 pour la fabrication de produits de boulangerie tel que du pain, caractérisée par les étapes suivantes :
en ce que le mélange d 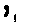 ingrédients de boulangerie est mélangé avec de l 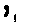 eau, en ce que la pâte ainsi obtenue est mise au repos pour une durée dépendante de la température pour obtenir un produit développé, étape pendant laquelle le liant se dissout dans l 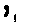 eau et libère ainsi les produits à grains fins et ingrédients (22) des produits à gros grains (14)
en ce que le produit développé est apporté dans une pâte de base et mélangé et pétri avec celle-ci
et en ce que la pâte ainsi obtenue est retravaillée jusqu 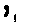 à atteindre le résultat voulu.

17. Procédé selon la revendication 16, caractérisé en ce que la pâte obtenue à partir du produit développé et de la pâte de base est mise au repos avant traitement ultérieur.

18. Procédé selon la revendication 16 ou 18, caractérisé en ce que, pour l 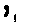 obtention du produit développé, il est apporté une quantité d 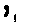 eau dont le poids correspond à celui de la quantité de mélange des ingrédients de boulangerie.
